# EUROPÄISCHE PATENTSCHRIFT

(11) **EP 1 831 409 B1**
(45) Veröffentlichungstag und Bekanntmachung des Hinweises auf die Patenterteilung: **23.10.2013**
(21) Anmeldenummer: 05812258.1
(22) Anmeldetag: 03.12.2005
(51) Int. Cl.: C21D 7/06, B24C 1/10, C04B 41/00, C21D 1/30, F16C 33/64

(54) **VERFAHREN ZUM RANDSCHICHTVERFESTIGEN MITTELS ÖLSTRAHLEN UND VORRICHTUNG ZUM DURCHFÜHREN DES VERFAHRENS**
METHOD FOR CASE HARDENING A COMPONENT BY MEANS OF OIL JETS AND DEVICE FOR CARRYING OUT SAID METHOD
PROCEDE POUR SOLIDIFIER UNE COUCHE SUPERFICIELLE AU MOYEN DE JETS D HUILE ,ET DISPOSITIF POUR METTRE EN OEUVRE LE PROCEDE

(30) Priorität: 21.12.2004 DE 102004062774
(43) Veröffentlichungstag der Anmeldung: 12.09.2007
(73) Patentinhaber: AB SKF, 415 50 Göteborg (SE)
(72) Erfinder: GEGNER, Jürgen, 90765 Fürth (DE); NIERLICH, Wolfgang, 97424 Schweinfurt (DE)
(74) Vertreter: Kohl, Thomas
(86) Internationale Anmeldenummer: PCT/EP2005/012962
(87) Internationale Veröffentlichungsnummer: WO 2006/066717

(56) Entgegenhaltungen:
- EP-A- 0 960 950
- DE-A1- 3 917 380
- US-A- 5 258 082
- DATABASE WPI Section Ch, Week 199025 Derwent Publications Ltd., London, GB; Class M24, AN 1990-191943 XP002375910 -& SU 1 507 817 A (COMPRESSOR EQUIP) 15. September 1989 (1989-09-15)

## Beschreibung

Die Erfindung betrifft ein Verfahren zum Behandeln eines Laufrings oder eines Walzkörpers eines Wälzlagers

Wälzlageroberflächen sind unter bestimmten tribologischen Beanspruchungsbedingungen anfällig für Rissbildung. Dabei erfolgt die Risseinleitung, ggf. tribochemisch unterstützt, anders als bei klassischer Wälzermüdung an der Laufbahnoberfläche selbst und die Rissausbreitung derart, dass es zum Abblättern der betroffenen Oberflächenschichten kommt. Dieser Mechanismus besitzt bei Lagerungen, die für lange Laufzeiten aufgelegt sind, besondere Bedeutung. Aus der DE 391738011 ist ein Verfahren zur Randschicht verfestigung mittels Ölstrahlen bekannt.

Eine Aufgabe der vorliegenden Erfindung ist es, ein Verfahren zum Behandeln eines mechanisch, insbesondere dynamisch, tribologisch und/oder korrosiv beanspruchten Bauelements bereitzustellen, so dass möglichst lange Gebrauchsdauem erzielt werden.

Die Aufgabe wird durch den Gegenstand des Anspruchs 1 gelöst. Vorteilhafte Ausgestaltungen sind in den Unteransprüchen beschrieben.

Gemäß Anspruch 1 wird bei einem Verfahren zum Behandeln eines Bauelements, umfassend ein Material kristalliner, teilkristalliner oder amorpher Struktur, also insbesondere metallisch oder keramisch, für ein Randschichtverfestigen, also ein Veredeln eines oberflächennahen Bereichs, wenigstens ein Teil einer Oberfläche des Bauelements mit einem Ölstrahl gestrahlt, wobei das Ölstrahlen mit einem temperierten Öl durchgeführt wird.

Die Erfindung beruht dabei auf der Erkenntnis, dass bei zyklischer Beanspruchung eines Bauelements, aus einem Material kristalliner, teilkristalliner oder amorpher Struktur, bei Keramik z.B. zugspannungsgesteuert, Oberflächenrisse mit Grübchenbildung entstehen können, wobei es speziell bei einem von der Oberfläche ausgehenden Versagen eines metallischen Bauelements im Schädigungsverlauf zu einem mechanisch induzierten Abbau der Druckeigenspannungen kommt. Mit dem Verfahren gemäß Anspruch 1 werden Druckeigenspannungen in der hochbeanspruchten Randschicht des behandelten Bauelements aufgebaut, die der Risseinleitung und -ausbreitung entgegenwirken und diese verzögern.

Weiterhin beruht die Erfindung auf der Erkenntnis, dass bei zyklischer Beanspruchung eines metallischen Bauelements, beispielsweise dem eingangs beschriebenen Überrollen des Laufrings durch die Wälzkörper, die im Betrieb zunehmend einsetzende Beweglichkeit von Versetzungen des Materials als wichtiger Mechanismus der Materialermüdung metallischer Werkstoffe wesentlich zur Werkstoffalterung (zunächst auch ohne metallographisch nachweisbare Gefügeumwandlung) und damit letztendlich zum Ausfall des Bauelements beiträgt. Mit dem Verfahren gemäß Anspruch 1 wird dabei über dynamische Reckalterungsvorgänge ein energetisch günstiger Zustand besagter Versetzungen stabilisiert und damit die Lebensdauer erhöht. Zugleich wird ein aufgebauter, risshemmender Druckeigenspannungszustand ohne betragsmäßige Abnahme stabilisiert.

Dadurch dass das Ölstrahlen, mit einem temperierten Öl mit Temperaturen von etwa 80 °C bis 400 °C für das Temperieren durchgeführt wird, werden mit Vorteil vorgenannte Stabilisierungsvorgänge begünstigt. Zur Vermeidung einer Öloxidation kann unter Schutzgasatmosphäre, insbesondere einem Stickstoffstrom in einem geeigneten Gehäuse, gearbeitet werden.

Im Gegensatz zum Kugel- oder Sandstrahlen bleibt beim Ölstrahlen eine beispielsweise durch ein Honen hergestellte Oberflächenbeschaffenheit sehr geringer Rauhigkeit wesentlich besser erhalten, wohingegen beim Kugel- oder Sandstrahlen zum Erzielen der gleichen Oberflächenbeschaffenheit nach dem Strahlen zu schleifen und/oder honen wäre, wodurch wiederum mit Nachteil ein Teil der strahlbehandelten Bereiche wieder abgetragen wird. Im Gegensatz zum in der Technik bekannten Hochdruck-Wasserstrahlen sind beim Ölstrahlen wegen möglicher Temperatureinwirkung größere Tiefen der Materialverfestigung und/oder eine stärkere Verfestigung erzielbar, was beispielsweise bei einer röntgenographischen Analyse der fertigen Bauelemente durch Messung des Eigenspannungstiefenverlaufs (auch mechanisch möglich, z.B. Bohrlochverfahren) und insbesondere bei metallischen Bauteilen auch durch einen entsprechenden Rückgang der Halbwertsbreite nachweisbar ist. Weiterhin ist ein Wasserstahlen insbesondere bei nicht korrosionsbeständigen Materialen, insbesondere nicht rostfreien Stählen, eben wegen der Gefahr der Korrosionsschädigung nachteilig.

Weitere Vorteile, Merkmale und Einzelheiten der Erfindung ergeben sich im folgenden anhand der Beschreibung eines Warmölstrahlens eines aus Wälzlagerstahl gefertigten Laufrings eines Wälzlagers als einem Ausführungsbeispiel der Erfindung.

Im einem Gebiet einer (elastisch-)plastischen Schicht, die sich an die Laufbahnoberfläche des Laufrings unmittelbar anschließt und die bei Betrieb des Wälzlagers hochbeansprucht wird, entsteht infolge bleibender Verformung während der vorausgehenden Herstellungsschritte des Laufrings ein versetzungsreiches und durch Substrukturen stabilisiertes Gefüge. Durch ein Warmölstrahlen besagter Laufbahnoberfläche wird ein günstiger Druckeigenspannungszustand in Oberflächennähe aufgebaut. Aufgrund einer mit der dynamischen Reckalterung vergleichbaren Verminderung der Versetzungsbeweglichkeit kommt es in der beeinflussten Randschicht zudem zur Stabilisierung eines gegen Materialermüdung beständigeren Gefüges.

Dabei wird speziell in Stählen der interstitiell gelöste Kohlenstoff im Gitter beweglich und kann unter Bildung sogenannter Cottrell-Wolken an die Versetzungskerne diffundieren, was auch als Segregation bezeichnet wird. Diese Atomanordnung ist energetisch begünstigt und wirkt daher bei Betrieb des Wälzlagers der einsetzenden Versetzungsbewegungen entgegen. Dadurch wird die Lebensdauer des Wälzlagers erhöht.

Mit dem Warmölstrahlen erfolgt gleichzeitig eine Stabilisierung des risshemmenden Druckeigenspannungszustandes, insbesondere in den bei Betrieb des Wälzlagers hochbeanspruchten Randschichten. Dabei werden je nach Einstellung der Strahlparameter (z.B. Geschwindigkeit und Öldichte) die Rissausbreitung hemmende Druckeigenspannungen mit Maximalwerten von mehreren hundert MPa und Tiefenverläufen bis in den Bereich von wenigen 10 bis über 100 µm erzeugt. Damit einhergehend werden mit Vorteil auch in größeren Abständen von der Laufbahnoberfläche bei nur geringem temperatur- und zeitabhängigen Abbau von Druckeigenspannungen mit Abnahme ihres Maximalwerts um typischerweise 10 % bis 20 % dort durch vorangegangene Hartbearbeitung (z.B. Drehen) erzeugte Versetzungsanordnungen stabilisiert.

Geeignete Temperaturen für das Warmölstrahlen liegen dabei in Abhängigkeit vom Material des Laufrings und angewandter Wärmebehandlung im Bereich zwischen 80 °C und 400 °C. Für einen martensitisch durch- oder randschichtgehärteten (z.B. Einsatzhärten oder Induktionshärten) Wälzlagerstahl liegt der typische Bereich zwischen 100 °C und 220 °C, wohingegen beispielsweise für einen bainitischen Stahl zwischen 100 °C und 300 °C günstig sind. Weiterhin ist die Temperatur natürlich auch unter Beachtung der jeweiligen Maßstabilitätsanforderungen des Laufrings gewählt. Falls der Ring induktiv oder im Ofen erwärmt wird, kann kurzzeitig (z.B. über 10 Minuten) auch eine höhere Temperatur gewählt werden. In Abhängigkeit von der Temperatur und der jeweiligen Ausbildung einer Anlage zum Durchführen des Warmölstrahlens wird zwischen ca. 1 bis 30 Minuten gestrahlt. Als Strahlöl wird dabei ein geeignetes, insbesondere ein entsprechend temperaturbeständiges Öl verwendet.

Das Ölstrahlen wird dabei bevorzugt als letzter Bearbeitungsschritt im Anschluss an eine Wärmebehandlung und/oder eine Feinbearbeitung, wie Hartdrehen, Hartfertigdrehen, Schleifen und Honen angewandt, doch kann auch eine mechanische Nachbearbeitung mit nur engbegrenztem Materialabtrag (z.B. Honen) zur Einstellung einer gewünschten Oberflächenqualität erfolgen. Da wie vorausgehend beschrieben durch das Warmölstrahlen infolge der Reckalterung auch der Versetzungszustand in größeren Tiefen unter der Laufbahnoberfläche stabilisierbar ist, führt eine Vorbearbeitung des Laufrings, beispielsweise mittels einer geeigneten mechanischen Bearbeitungsmethode (z.B. Hartdrehen), die auch in größeren Tiefen einen geeigneten Eigenspannungszustand einstellt, zu besonders günstigen Prozessresultaten.

Eine Vorrichtung zum Durchführen des Warmölstrahlens umfasst Haltemittel für ein Halten des Wälzlagerrings während des Bestrahlens und Abstrahlmittel zum Ausgeben des Ölstrahls. Die Haltemittel sind dabei beispielsweise für einen inneren Laufring derart ausgebildet, dass sie den Laufring innen halten und für ein vollständiges Strahlen der am Außenmantel des Laufrings angeordneten Laufbahn die Laufbahn an den Abstrahlmitteln vorbeidrehen und auch ein Bewegen in Richtung der Hauptachse des Laufrings ermöglichen. Dabei umfassen die Abstrahlmittel wenigstens eine Düse, insbesondere in einer Ausbildung als Spaltdüse. Weiterhin umfasst die Vorrichtung Erwärmungsmittel für ein Temperieren des Öls und/oder des Laufrings mittels induktiver Erwärmung oder einem Ofen. In anderen Ausführungsformen können natürlich auch die Abstrahlmittel wenigstens in einer Raumrichtung bewegbar ausgebildet sein. Die Vorrichtung kann auch, insbesondere durch ein geeignetes Gehäuse, Ölstrahlen unter Schutzgasatmosphäre (z.B. Stickstoffstrom) erlauben.

Wälzlager mit Laufringen und/oder Wälzkörpern, die nach dem vorausgehend beschriebenen Verfahren hergestellten sind, sind dabei mit besonderem Vorteil beispielsweise in Getrieben einsetzbar.

## Patentansprüche

1. Verfahren, zur Behandlung eines Laufrings oder eines Wälzkörpers eines Wälzlagers, umfassend ein Material kristalliner, teilkristalliner und/oder amorpher Struktur, bei dem für ein Rand-schichtverfestigen wenigstens ein Teil einer Oberfläche des Laufrings oder Wälzkörpers mit einem Ölstrahl gestrahlt wird, wobei das Ölstrahlen mit einem temperierten Öl mit Temperaturen zwischen 80°C und 400°C durchgeführt wird.

2. Verfahren nach Anspruch 1, wobei das Ölstrahlen unter Hochdruck, insbesondere mit einem Druck größer 150 bar, erfolgt.

3. Verfahren nach Anspruch 1 oder 2, wobei das Ölstrahlen unter Schutzgasatmosphäre erfolgt.

4. Verfahren nach einem der Ansprüche 1 bis 3, wobei der Laufring oder Wälzkörper während des Ölstrahlens und/oder dem Ölstrahlen zeitlich nachfolgend temperiert wird.

5. Verfahren nach einem der Ansprüche 1 bis 4, wobei der Laufring oder Wälzkörper aus einem martensitisch durch- oder randschichtgehärteten Wälzlagerstahl besteht und mit Temperaturen zwischen 100 °C und 220 °C temperiert wird.

6. Verfahren nach einem der Ansprüche 1 bis 4, wobei der Laufring oder Wälzkörper aus einem bainitischen Stahl besteht und mit Temperaturen zwischen etwa 100 °C und 300 °C temperiert wird.

7. Verfahren nach einem der Ansprüche 1 bis 6, wobei das Ölstrahlen mit einer Temperatur durchgeführt wird, die kleiner einer Anlass- oder Umwandlungstemperatur einer zeitlich vorangehenden Wärmebehandlung des Laufrings oder Wälzkörpers ist.

8. Verfahren nach einem der Ansprüche 1 bis 7, wobei dem Ölstrahlen zeitlich vorausgehend ein Wärmebehandeln und/oder Feinbearbeiten des Laufrings oder Wälzkörpers durchgeführt wird.

9. Verfahren nach Anspruch 8, wobei das Feinbearbeiten ein Hartdrehen, Schleifen und/oder Honen umfasst.

10. Verfahren nach Anspruch 1, wobei das Material ein Metall ist.

11. Verfahren nach Anspruch 10, wobei das Metall ein Stahl, insbesondere ein Wälzlagerstahl ist.

12. Verfahren nach Anspruch 1, wobei das Material eine Keramik ist.

13. Verfahren nach Anspruch 1, wobei die Laufbahnen des Laufrings und/oder des Wälzkörpers gestrahlt werden.

14. Verfahren nach Anspruch 1 bis 13, wobei nach dem Ölstrahlen ein mechanisches Bearbeiten wenigstens des Teils der Oberfläche mit einer Abtragtiefe bis maximal etwa 15 µm erfolgt.

15. Verfahren nach Anspruch 14, wobei gehont wird.

## Claims

1. Process for treating a running ring or a rolling body of a rolling bearing, comprising a material of crystalline, partially crystalline and/or amorphous structure, in which process, for surface hardening, at least part of a surface of the running ring or rolling body is blasted with an oil jet, wherein the oil blasting is carried out with a temperature-controlled oil at temperatures of between 80°C and 400°C.

2. Process according to Claim 1, wherein the oil blasting is effected at high pressure, in particular at a pressure of greater than 150 bar.

3. Process according to Claim 1 or 2, wherein the oil blasting is effected under a protective gas atmosphere.

4. Process according to one of Claims 1 to 3, wherein the running ring or rolling body is temperature-controlled during the oil blasting and/or following the oil blasting.

5. Process according to one of Claims 1 to 4, wherein the running ring or rolling body consists of a rolling bearing steel which is thoroughly hardened or surface-hardened by a martensitic process, and is temperature-controlled at temperatures of between 100°C and 220°C.

6. Process according to one of Claims 1 to 4, wherein the running ring or rolling body consists of a bainitic steel and is temperature-controlled at temperatures of between approximately 100°C and 300°C.

7. Process according to one of Claims 1 to 6, wherein the oil blasting is carried out at a temperature which is less than a tempering temperature or conversion temperature of a preceding heat treatment of the running ring or rolling body.

8. Process according to one of Claims 1 to 7, wherein a heat treatment and/or finishing of the running ring or rolling body is carried out before the oil blasting.

9. Process according to Claim 8, wherein the finishing comprises hard turning, grinding and/or honing.

10. Process according to Claim 1, wherein the material is a metal.

11. Process according to Claim 10, wherein the metal is a steel, in particular a rolling bearing steel.

12. Process according to Claim 1, wherein the material is a ceramic.

13. Process according to Claim 1, wherein the raceways of the running ring and/or of the rolling body are blasted.

14. Process according to Claims 1 to 13, wherein, after the oil blasting, at least the part of the surface is machined with a removal depth of up to at most approximately 15 µm.

15. Process according to Claim 14, wherein honing is performed.

## Revendications

1. Procédé de traitement d'une bague de roulement ou d'un corps de roulement d'un palier à roulement, comportant un matériau de structure cristalline, semi-cristalline et/ou amorphe, dans lequel un jet d'huile est projeté sur au moins une partie d'une surface de la bague de roulement ou du corps de roulement pour un durcissement superficiel, la projection d'huile étant effectuée avec une huile dont la température est régulée à des températures entre 80 °C et 400 °C.

2. Procédé selon la revendication 1, dans lequel la projection d'huile s'effectue sous haute pression, en particulier à une pression supérieure à 150 bars.

3. Procédé selon la revendication 1 ou 2, dans lequel la projection d'huile s'effectue dans une atmosphère de gaz protecteur.

4. Procédé selon l'une quelconque des revendications 1 à 3, dans lequel la température de la bague de roulement ou du corps de roulement est régulée pendant la projection d'huile et/ou de manière consécutive à la projection d'huile.

5. Procédé selon l'une quelconque des revendications 1 à 4, dans lequel la bague de roulement ou le corps de roulement est constitué(e) d'un acier pour paliers à roulement martensitique soumis à une trempe à coeur ou à une trempe superficielle et sa température est régulée à des températures entre 100°C et 220 °C.

6. Procédé selon l'une quelconque des revendications 1 à 4, dans lequel la bague de roulement ou le corps de roulement est constitué(e) d'un acier bainitique et sa température est régulée à des températures entre environ 100°C et 300 °C.

7. Procédé selon l'une quelconque des revendications 1 à 6, dans lequel la projection d'huile est effectuée à une température qui est inférieure à une température de revenu ou de transition d'un traitement thermique antérieur de la bague de roulement ou de l'élément de roulement.

8. Procédé selon l'une quelconque des revendications 1 à 7, dans lequel un traitement thermique et/ou un usinage de précision de la bague de roulement ou du corps de roulement est/sont effectué (s) avant la projection d'huile.

9. Procédé selon la revendication 8, dans lequel l'usinage de précision comporte un tournage dur, une rectification et/ou un pierrage.

10. Procédé selon la revendication 1, dans lequel le matériau est un métal.

11. Procédé selon la revendication 10, dans lequel le métal est un acier, en particulier un acier pour paliers à roulement.

12. Procédé selon la revendication 1, dans lequel le matériau est une céramique.

13. Procédé selon la revendication 1, dans lequel les chemins de roulement de la bague de roulement et/ou du corps de roulement sont soumis à une projection.

14. Procédé selon les revendications 1 à 13, dans lequel, après la projection d'huile, un usinage mécanique d'au moins la partie de la surface est effectué avec une profondeur d'enlèvement d'au maximum environ 15 µm.

15. Procédé selon la revendication 14, dans lequel un pierrage est effectué.
